# FASCICULE DE BREVET EUROPEEN

(11) **EP 2 400 636 B1**
(45) Date de publication et mention de la délivrance du brevet: **22.04.2020**
(21) Numéro de dépôt: 11305804.4
(22) Date de dépôt: 24.06.2011
(51) Int. Cl.: H02K 3/28, B60L 53/24

(54) **Moteur électrique à courant alternatif pouvant être branché dans le circuit de charge de batteries**
Wechselstrommotor, der in den Stromkreis zur Ladung von Batterien geschaltet werden kann
Alternating-current electric motor being able to be connected into the charging circuit for batteries

(30) Priorité: 25.06.2010 FR 1055084
(43) Date de publication de la demande: 28.12.2011
(73) Titulaire: Valeo Siemens eAutomotive France SAS, 95800 Cergy (FR)
(72) Inventeur: Bouchez, Boris, 95800 CERGY LE HAUT (FR); De Sousa, luis, 95670 ERAGNY SUR OISE (FR)
(74) Mandataire: Argyma

(56) Documents cités:
- EP-A2- 0 289 292
- EP-A2- 0 994 555
- WO-A1-2010/057893
- FR-A- 1 270 277
- FR-A1- 2 844 646

## Description

La présente invention concerne un moteur électrique à courant alternatif d'un dispositif électrique combiné d'alimentation et de charge permettant d'alimenter un moteur électrique ou un alternateur par des batteries rechargeables.

L'invention trouvera avantageusement une application dans le domaine des véhicules automobiles électriques ou hybrides dans lesquels les batteries peuvent alimenter le moteur via un onduleur et être rechargées lorsque l'automobile est à l'arrêt au moyen d'un réseau électrique alternatif.

Toutefois bien que particulièrement prévu pour une telle application le dispositif électrique selon l'invention pourra être utilisé dans d'autres domaines et notamment dans des dispositifs de génération d'énergie de type éolien ou hydraulique.

### ARRIERE PLAN DE L'INVENTION

Classiquement, un véhicule électrique ou hybride comporte une chaîne de traction formée par des batteries rechargeables haute tension délivrant un courant continu à un onduleur qui transforme ce courant continu en un courant alternatif permettant d'alimenter un moteur électrique, de type machine électrique tournante, ce dernier assurant la mise en mouvement du véhicule.

De manière à assurer la recharge de ces batteries haute tension il est connu d'équiper le véhicule d'un dispositif de charge embarqué comportant essentiellement un convertisseur alternatif-continu permettant de redresser la puissance alternative du réseau électrique domestique en puissance continue pour charger les batteries.

Généralement, le dispositif de charge peut également comporter un pré-régulateur correcteur de facteur de puissance (Power Factor Corrector en langue anglaise) dont le rôle est de limiter la rejection d'harmonique sur le réseau électrique.

Les composants électroniques de la chaîne d'alimentation d'une part et de la chaîne de charge d'autre part sont coûteux. Par ailleurs, l'alimentation du moteur et la charge des batteries s'effectuent à des phases différentes aussi il a été proposé, dans les demandes EP 0 603 778 et WO97/08009, de réutiliser une partie du moteur et des composants servant à son alimentation pour réaliser le dispositif de charge des batteries.

A cet effet, le dispositif de charge des batteries utilise l'onduleur pour former un convertisseur alternatif continu ainsi que les bobinages du moteur pour former les inductances. Le passage du mode d'alimentation du moteur au mode de charge des batteries est assuré par des moyens de commutation avec des contacteurs de puissance en déconnectant le neutre.

L'utilisation des connecteurs de puissance est toutefois problématique dans le sens où, assurant le passage des courants de la machine électrique, ils doivent être surdimensionnés. Pour pallier à cet inconvénient une solution consiste à réaliser une structure présentant des moyens de commutation intégrés avec des ponts en H.

Toutefois, dans les deux cas précités l'utilisation des phases du moteur comme inductance pour redresser le courant du réseau électrique cause des perturbations au niveau du rotor du moteur. En effet, les inductances sont magnétisées par les courants alternatifs du réseau électrique créant ainsi des champs magnétiques. Ces champs magnétiques agissent sur le rotor qui peut entrer en mouvement, par exemple en vibrant, et même, en fonction des champs magnétiques et des caractéristiques du rotor, entrer en rotation. Cette mise en mouvement pose des problèmes à la fois de confort et de sécurité dans le cas d'une utilisation du dispositif électrique combiné dans un véhicule électrique même si ce dernier peut être équipé d'un système de découplage du train de la machine lors de la charge.

Pour pallier à cet inconvénient une solution consiste à réaliser une compensation statique consistant à injecter le courant de charge dans au moins un bobinage du stator relié à une phase du réseau en utilisant un point de connexion supplémentaire, dit point milieu.

Un bobinage du stator comporte de façon classique une pluralité de bobines formées par une pluralité de spires.

Le point milieu, sépare le bobinage de phase du stator en deux parties de sorte que le courant de charge, injecté via le point de milieu, est divisé en deux courants circulants dans des sens opposés à travers chaque demi-bobinage, chaque demi-bobinage comportant le même nombre de spires.

Le document WO2010/057893A décrit un exemple de moteur électrique conforme au préambule de la revendication 1.

Cette solution de compensation par injection du courant de charge dans les points milieux des bobinages de phases a pour conséquence d'annuler la force magnétomotrice et d'annuler les inductances des deux demi-bobinages. Seule reste apparente l'inductance de fuite très faible liée aux imperfections des bobines.

Une inductance trop faible du moteur a pour conséquence de rendre le contrôle des courants de charge difficiles, notamment à cause des importantes ondulations du courant à la fréquence de découpage.

### OBJET DE L'INVENTION

Dans ce contexte, la présente invention vise à proposer un moteur électrique à courant alternatif pour un dispositif permettant d'alimenter le moteur électrique, et de recharger des batteries en utilisant des éléments de la chaîne d'alimentation, c'est-à-dire des éléments du moteur et de l'onduleur, et tel que le moteur électrique comporte un bobinage du stator permettant d'obtenir une inductance apparente au point milieu suffisamment importante pour pallier aux inconvénients précités tout en s'affranchissant de la mise en mouvement du rotor en mode charge.

### RESUME DE L'INVENTION

A cette fin, l'invention propose un moteur électrique conforme à la revendication 1.

Dans un exemple particulier, les bobines couplées, voire fortement couplées, entre elles sont mises d'un même côté par rapport au point de connexion. Autrement dit, les bobines couplées, voire fortement couplées, entre elles appartiennent au même demi-bobinage. En outre, les bobines non couplées, voire faiblement couplées, entre elles sont mises dans des côtés différents par rapport au point de connexion. Autrement dit, les bobines non couplées, voire faiblement couplées, entre elles appartiennent à des demi-bobinages différents.

Par exemple, chaque bobine est répartie sur plusieurs encoches. Deux bobines d'une phase appartenant à des demi-bobinages différents sont réparties sur des encoches situées respectivement de part et d'autre du point de connexion.

Par exemple, chaque demi-bobinage comprend au moins deux bobines enroulées en sens inverse l'une par rapport à l'autre de façon à réduire le couplage magnétique entre les deux demi-bobinages d'une phase. Dans un exemple particulier chaque demi-bobinage comprend un nombre pair de bobines, chaque bobine ayant une bobine correspondante enroulée en sens inverse.

Ainsi, le mode de bobinage selon l'invention permet d'obtenir une valeur élevée de l'inductance apparente en mode charge au niveau du point de connexion tout en s'affranchissant de la mise en mouvement du rotor en mode charge.

Le découplage des demi-bobinages de chaque phase du stator permet ainsi d'améliorer la charge des batteries du dispositif ainsi que le contrôle du courant de charge.

En effet, l'inductance apparente lors de la charge est augmentée et est supérieure à une inductance de fuite des bobines. En particulier, l'inductance apparente correspond à une inductance utile du moteur. Par exemple, l'inductance apparente au point de connexion en mode charge est comprise entre 1 mH et 100 mH.

Outre les caractéristiques principales qui viennent d'être mentionnées dans le paragraphe précédent, le moteur électrique à courant alternatif selon l'invention, peut présenter une ou plusieurs caractéristiques supplémentaires ci-dessous, considérées individuellement ou selon toutes les combinaisons techniquement possibles :
- chaque demi-bobinage est formé par une pluralité n de bobines câblées en série ;
- chaque demi-bobinage est formé par une pluralité n'/2 groupes de bobines câblées en série, chacun desdits groupes comportant une pluralité n de bobines câblées en parallèle ;
- chaque demi-bobinage comporte le même nombre de spires ;
- chacun des demi-bobinages d'une phase est diamétralement opposé sur ledit stator de façon à réduire le couplage magnétiques entre deux demi-bobinages d'une phase ;
- ledit stator comporte des entrefers s'étendant radialement à travers le stator permettant de réduire le couplage magnétique entre les deux demi-bobinages d'une phase ;
- ledit moteur comporte un rotor comportant des ouvertures et/ou des entrefers permettant d'augmenter la réluctance entre les deux demi-bobinages de chaque phase dudit stator.

L'invention a également pour objet un dispositif électrique combiné d'alimentation et de charge comportant un moteur électrique à courant alternatif selon l'invention relié à un réseau électrique, un onduleur et des moyens d'accumulation d'énergie électrique.

Avantageusement, le dispositif électrique comporte également un convertisseur continu-continu.

### BREVE DESCRIPTION DES DESSINS

La présente invention sera mieux comprise à la lecture d'un exemple détaillé de réalisation en référence aux dessins annexés, fournis à titre d'exemple non limitatif, parmi lesquels :
- la figure 1 représente de manière schématique un dispositif électrique combiné de charge et d'alimentation comportant un moteur électrique selon l'invention implanté dans un véhicule automobile ;
- la figure 2 représente de manière schématique un premier mode de bobinage d'un stator de moteur triphasé d'un moteur électrique selon l'invention ;
- la figure 3 représente de manière schématique un exemple de réalisation du mode de bobinage illustré à la figure 2 sur un stator triphasé à deux paires de pôles à bobinage réparti sur deux encoches ;
- la figure 4 représente de manière schématique un deuxième mode de bobinage d'un stator de moteur triphasé d'un moteur électrique selon l'invention ;
- la figure 5 représente de manière schématique un exemple de câblage d'un stator à bobinage série-parallèle à quatre pôles selon le deuxième mode de bobinage illustré à la figure 4 ;
- la figure 6 représente de manière schématique un stator câblé selon l'exemple de câblage illustré à la figure 5 ;
- la figure 7 représente de manière schématique un deuxième mode de réalisation d'un stator câblé selon l'exemple de câblage illustré à la figure 5 ;
- la figure 8 représente de manière schématique un troisième mode de bobinage d'un stator de moteur triphasé d'un moteur électrique selon l'invention ;
- la figure 9 représente de manière schématique un stator à deux paires de pôles câblés selon le troisième mode de câblage illustré à la figure 8 dont chaque demi-bobinage est indépendant magnétiquement du second ;
- la figure 10 représente de manière schématique un moteur électrique selon l'invention comprenant un rotor ayant des ouvertures et un stator câblé selon l'exemple de câblage illustré à la figure 5 ;
- la figure 11 représente de manière schématique un exemple de bobinage réparti sans point de connexion ;
- la figure 12 représente de manière schématique un exemple de bobinage réparti avec point de connexion selon l'art antérieur.

### DESCRIPTION DETAILLEE DE L'INVENTION

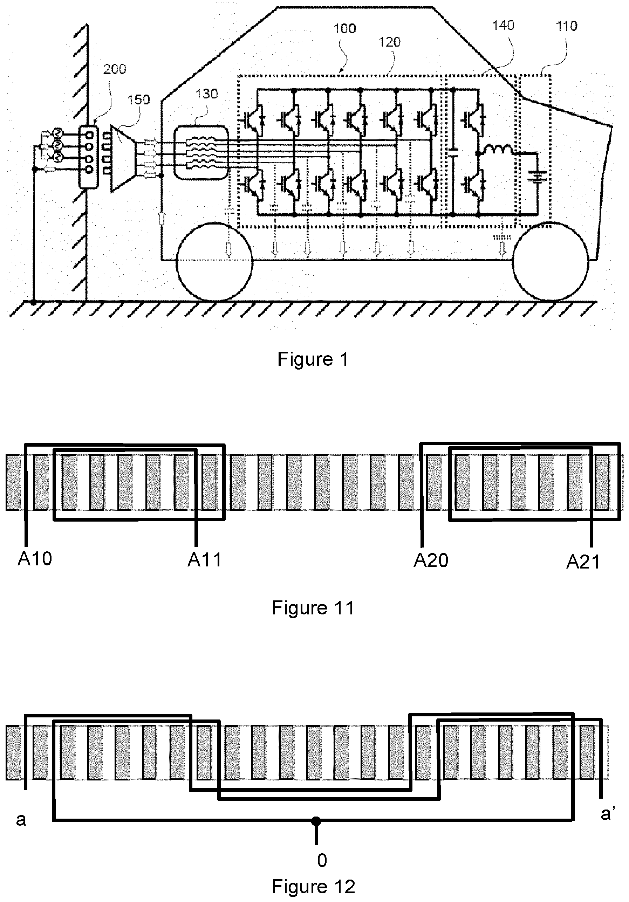

La figure 1 illustre de façon générale un dispositif électrique combiné de charge et d'alimentation 100 formé par des batteries rechargeables 110, un onduleur 120 et un moteur électrique 130 selon l'invention permettant à la fois de recharger les batteries rechargeables 110 à partir d'un réseau électrique 200 triphasé en mode charge et d'alimenter le moteur électrique triphasé pour sa mise en rotation en mode alimentation.

Avantageusement, l'onduleur a une structure de pont en H pour chaque phase du moteur permettant ainsi de conserver la connexion du neutre de chaque phase du moteur lors de la charge des batteries ; toutefois l'onduleur peut être, de façon plus classique, un onduleur réalisé avec des ponts triphasés et des moyens de commutation de type contacteur de puissance pour passer du mode charge des batteries 110 au mode d'alimentation du moteur 130.

Le dispositif 100 peut comporter en outre un convertisseur DC/DC 140 (continu-continu) entre l'onduleur 120 et les batteries 110 permettant d'adapter la tension du réseau électrique d'alimentation 200 aux caractéristiques des batteries 110 et d'optimiser le dimensionnement de l'onduleur 120 sans dégrader le rendement du dispositif 100.

Enfin, le dispositif 100 comporte également des moyens de liaisons 150 pour relier le dispositif 100 au réseau électrique 200 lorsque les batteries ont besoin d'être rechargé.

Dans la suite de la demande, on s'intéressera plus particulièrement au moteur électrique 130, de type à courant alternatif, formé par un rotor et un stator ainsi qu'au mode de bobinage du stator du moteur 130 à courant alternatif. Le rotor du moteur peut être indifféremment un rotor à aimant permanent, un rotor à bobinage d'excitation ou encore une cage d'écureuil.

De façon générale, le stator d'un moteur électrique 130 à courant alternatif d'un dispositif combiné de charge et d'alimentation 100 comporte au moins deux bobinages qui sont reliés aux phases du réseau électrique lorsque le dispositif 100 est en mode charge.

Dans le cas d'un réseau de charge monophasé, le stator comporte deux bobinages de phases et dans le cas d'un réseau de charge triphasé, le stator comporte au moins trois bobinages de phases.

Les moteurs triphasés étant les moteurs les plus répandus dans l'industrie et dans les systèmes de traction de véhicule automobile comme illustré à la figure 1, nous décrirons principalement différents modes de bobinage d'un moteur triphasé. Toutefois, l'invention n'est pas limitée à un moteur triphasé et elle est applicable par analogie à un moteur polyphasé ou à un moteur monophasé.

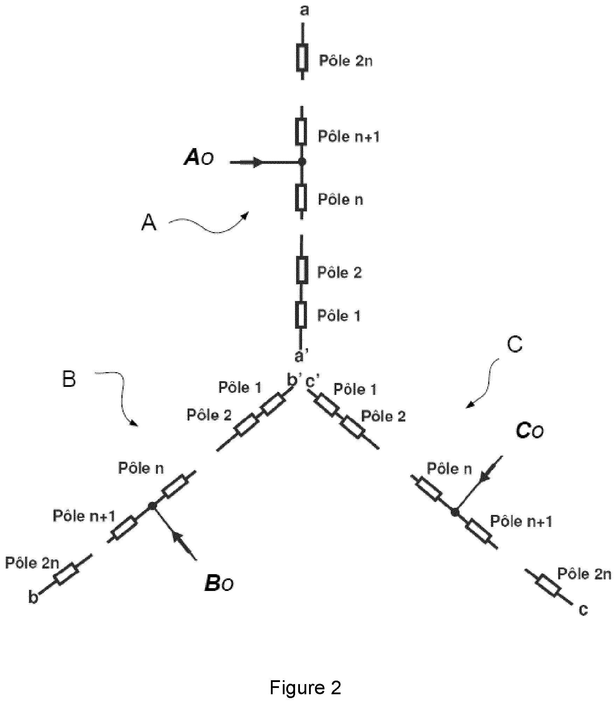

La figure 2 est un schéma représentant un premier principe de bobinage d'un stator de moteur triphasé, dont les trois phases sont notées A, B et C, intégrant des points de connexion A0, B0, C0 pour l'injection du courant de charge et permettant de s'affranchir des mouvements du rotor en mode charge.

Dans ce premier mode de réalisation, le stator est bobiné de sorte que chaque phase du stator reliée à une phase du réseau est formée par une pluralité 2n de bobines câblées en série. Chacune des bobines de chaque phase participant à la formation des différents pôles du stator.

Les points de connexion A0, B0, C0 sont positionnés de sorte qu'ils séparent chaque bobinage de phase A, B, C en deux demi-bobinage ou deux demi-bobines comportant respectivement deux points de connexion a-a', b-b', c-c' reliés avantageusement aux branches de l'onduleur 120 tel qu'illustré à la figure 1.

Avantageusement, les points de connexion A0, B0, C0 sont les points milieux de chaque bobinage de phase et sont positionnés de sorte que chacun des deux groupes de bobines comportent n bobines en série et le même nombre de spires.

Avec ce premier mode de bobinage, le courant de charge injecté aux points milieux A0, B0, C0 crée localement des forces magnétomotrices dans le bobinage qui s'opposent.

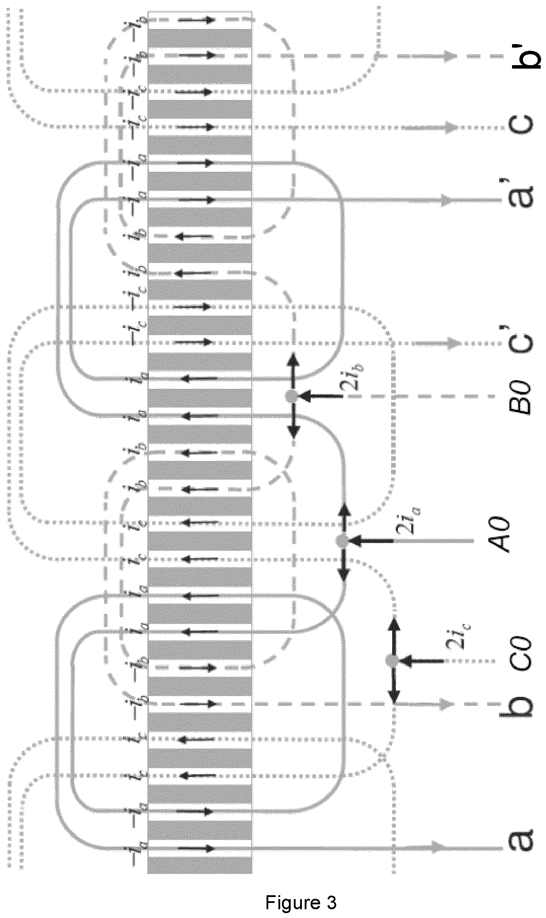

En outre, chaque demi-bobinage d'une phase A, B, C comporte une pluralité de bobines câblées entre elles de façon à réduire le couplage magnétique de chaque demi-bobinage au niveau du point de connexion A0, B0, C0 de sorte qu'il réside une inductance apparente non nulle au point milieu en mode charge. En particulier, l'inductance apparente est supérieure à l'inductance de fuite des bobines. Par exemple, les bobines sont câblées comme illustré en figure 3.

Les inductances propres de chaque demi-bobinage ne s'annulent pas ce qui permet de bénéficier aux points milieux A0, B0, C0 d'une inductance apparente non nulle en mode charge et donc très largement supérieure à l'inductance de fuite liée aux imperfections des bobines.

La figure 3 illustre le mode de bobinage décrit précédemment à la figure 2 sur un stator triphasé à deux paires de pôles à bobinage réparti sur deux encoches. Dans cet exemple, chaque pôle est formé par l'association d'une bobine de chaque phase comportant deux spires. La figure 3 illustre également comment connecter les points milieux A0, B0, C0 sur chaque phase A, B, C selon le mode de bobinage décrit à la figure 2. Ainsi, en mode charge, le courant de charge triphasé de composante 2*i*_{A}, 2*i*_{B}, 2*i*_{C} est injecté sur chaque phase du stator reliée avec le réseau triphasé via les points milieux A0, B0, C0 et se réparti selon les flèches illustrées à la figure 3.

L'exemple en figure 3 selon l'invention sera mieux compris en faisant référence aux figures 11 et 12.

La figure 11 présente un exemple de bobinage réparti. Un premier enroulement est alimenté par ses bornes A10, A11. Un second enroulement est alimenté par ses bornes A20, A21. Les deux enroulements n'ont pas de point de connexion commun.

La figure 12 présente un exemple de bobinage réparti avec un point de connexion O selon l'art antérieur. Un courant délivré au point de connexion O se divise en un premier courant circulant dans un premier demi-bobinage pour sortir à la borne a, et en un second courant circulant dans un second demi-bobinage pour sortir à la borne a'. On observe que des bobines appartenant à des demi-bobinages différents sont situées du même côté par rapport au point de connexion O. Ces bobines sont fortement couplées mais appartiennent à des demi-bobinages différents. Ainsi, l'exemple de bobinage en figure 12 ne permet pas d'obtenir une inductance apparente supérieure à une inductance de fuite des bobines.

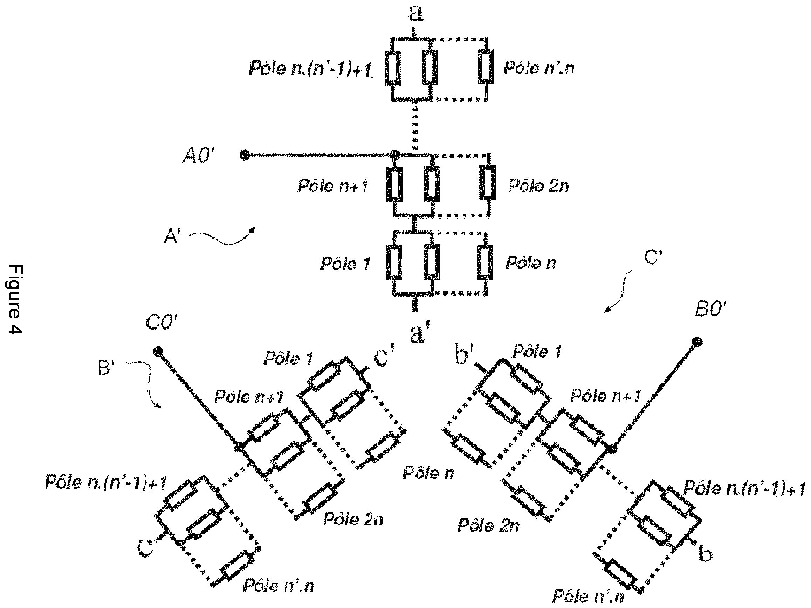

La figure 4 est un schéma représentant un deuxième principe de bobinage d'un stator d'un moteur triphasé, dont les trois phases sont notées A', B' et C', intégrant des points milieux A0', B0', C0' pour l'injection du courant de charge et permettant de s'affranchir des mouvements du rotor en mode charge.

Dans ce deuxième mode de réalisation, le bobinage du stator consiste à relier n' groupes de bobines en série, chacun des n' groupes de bobines étant formé par une pluralité n de bobines câblées en parallèle.

L'avantage d'un tel bobinage, dit bobinage série-parallèle tel qu'illustré, permet dans un premier temps de réaliser un bobinage avec des conducteurs de faible section car le courant de charge se répartit de manière équilibrée dans les différentes branches en parallèle du bobinage, ce qui facilite les opérations de bobinage.

Les points de connexion A0', B0', C0' sont positionnés de sorte qu'ils séparent le bobinage en deux demi-bobinages comportant plusieurs groupes de n bobines en parallèle. Selon un mode avantageux, les points de connexion A0', B0', C0' sont les points milieux des bobinages de phase du stator. Dans ce cas, les points de connexion A0', B0', C0' sont positionnés de sorte que les bobinages de phase sont partitionnées en deux demi-bobinages symétriques ayant de part et d'autre autant de bobines et formant de part et d'autre autant de paires de pôles, c'est-à-dire (n'.n)/2 pôles. De façon similaire au mode de bobinage précédent, les points de connexion des extrémités des bobinages de phase a-a', b-b', c-c' sont reliés avantageusement aux branches de l'onduleur 120 tel qu'illustré à la figure 1.

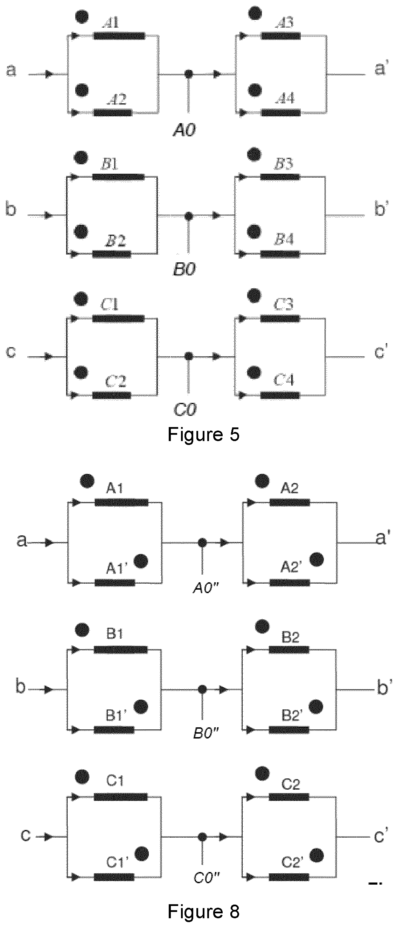

En outre, chaque demi-bobinage d'une phase A, B, C comporte une pluralité de bobines câblées entre elles de façon à réduire le couplage magnétique de chaque demi-bobinage au niveau du point de connexion A0, B0, C0 de sorte qu'il réside une inductance apparente non nulle au point milieu en mode charge. En particulier, l'inductance apparente est supérieure à l'inductance de fuite des bobines. Par exemple, les bobines sont câblées comme illustré en figure 5, 6, 7, 8, ou 9.

Le bobinage série-parallèle tel qu'illustré permet ainsi de découpler magnétiquement les deux demi-bobinages de part et d'autre du point milieu. Ainsi, l'inductance mutuelle des deux demi-bobinages est faible ce qui permet d'obtenir une inductance apparente au point milieu élevée nécessaire au mode charge.

Le découplage des demi-bobinages peut également être augmenté ou diminué en éloignant ou en rapprochant physiquement les deux demi-bobinages sur le stator de sorte que la réluctance du fer du stator intervient dans le découplage des deux demi-bobinages.

La figure 5 illustre à cet effet un exemple de câblage d'un stator à bobinage série-parallèle à huit pôles (i.e. quatre paires de pôles) dont chaque demi-bobinage d'un bobinage de phase est séparé diamétralement.

Sur la figure 5, les points visibles à proximité des bobines définissent le sens d'enroulement du bobinage dans les encoches prévues à cet effet sur le stator.

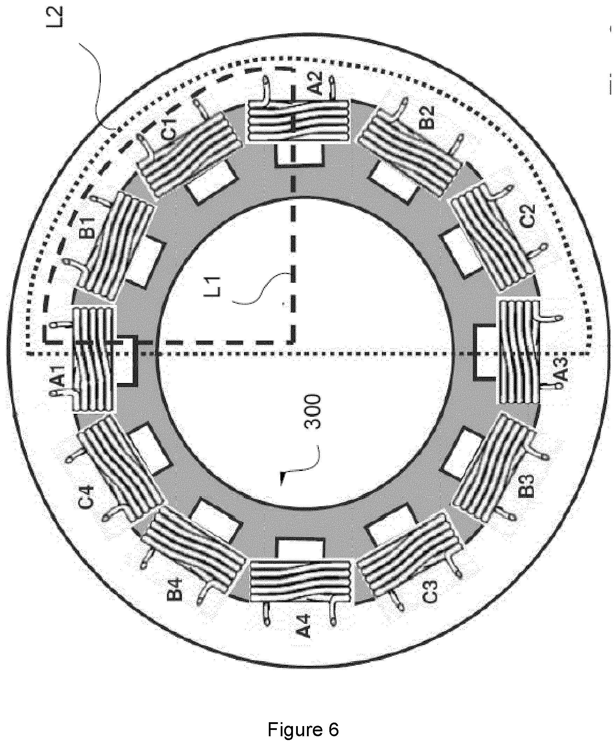

La figure 6 représente schématiquement un stator 300 câblé selon l'exemple de la figure 5 dont les bobines du premier demi-bobinage sont séparées diamétralement des bobines du second demi-bobinage.

La référence L1 représente le flux mutuel entre deux bobines A1, A2 séparées d'un quart de tour dans le sens indirect et la référence L2 représente le flux mutuel entre deux bobines A1, A3 diamétralement opposées.

La reluctance entre les deux bobines A1, A3 diamétralement opposées est supérieure à celle entre les deux bobines A1, A2 séparées d'un quart de tour dans le sens indirect. Le flux mutuel L1 est donc supérieur au flux mutuel L2. Ainsi, les deux bobines A1, A2 séparées d'un quart de tour dans le sens indirect sont fortement couplées, alors que les deux bobines A1, A3 diamétralement opposées sont faiblement couplées.

Ainsi, dans la phase A, les bobines A1, A2 appartiennent au même demi-bobinage, tandis que les bobines A1, A3 diamétralement opposées appartiennent à des demi-bobinages différents.

Une répartition similaire des bobines s'applique aux autres phases B, C.

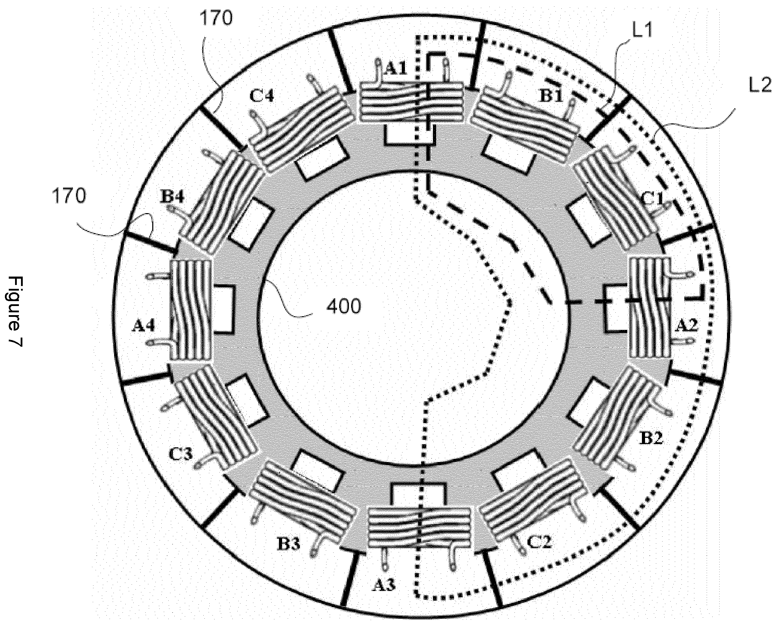

Selon un autre mode de réalisation, le découplage des deux demi-bobinages peut être augmenté par l'ajout d'entrefers sur le stator 400 tel qu'illustré à la figure 7.

La figure 7 présente un exemple de moteur électrique selon l'invention comprenant un stator câblé selon l'exemple de câblage illustré à la figure 5. Les entrefers sont définis grâce à des cales 170, de préférence en un matériau non magnétique ou non métallique. La longueur des cales 170 détermine la largeur des entrefers.

En considérant la phase A, les entrefers augmentent la reluctance entre les bobines A1 et A3 par rapport à l'exemple en figure 6. Ainsi, les bobines A1 et A3 sont encore plus faiblement couplées que dans l'exemple de la figure 6. Le couplage magnétique de chaque demi-bobinage au niveau du point de connexion est donc diminué par rapport à l'exemple en figure 6.

Enfin, la conception du rotor peut également participer en complément au découplage des deux demi-bobinages, notamment par les ouvertures nécessaires à l'emplacement des aimants, par la présence d'entrefer ou encore par des ouvertures volontaires rajoutées dans le rotor afin d'augmenter la réluctance entre les deux demi-bobinages du stator.

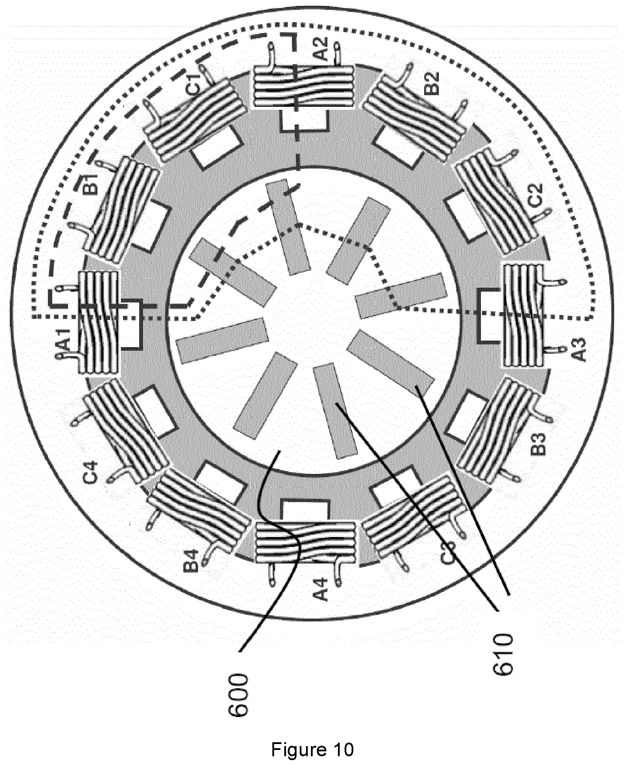

La figure 10 présente un exemple de moteur électrique selon l'invention dans lequel la conception du rotor 600 participe au découplage des deux demi-bobinages d'une phase. Le rotor 600 comprend des ouvertures 610 disposées selon une direction radiale. Dans un exemple particulier, les ouvertures 610 comprennent des aimants.

Dans l'exemple de la figure 10, les bobines sont câblées comme dans la figure 5. En considérant la phase A, les ouvertures 610 augmentent la reluctance entre les bobines A1 et A3 par rapport à l'exemple en figure 6. Ainsi, les bobines A1 et A3 sont encore plus faiblement couplées que dans l'exemple de la figure 6. Le couplage magnétique de chaque demi-bobinage au niveau du point de connexion est donc diminué par rapport à l'exemple en figure 6.

La figure 8 est un schéma représentant un troisième principe de bobinage d'un stator d'un moteur triphasé, dont les trois phases sont notées A", B" et C", intégrant des points milieux A0", B0", C0" pour l'injection du courant de charge et permettant de s'affranchir des mouvements du rotor en mode charge.

Dans chaque demi-bobinage, les bobines ont des flux qui se compensent entre eux grâce à l'enroulement en sens inverse des bobines au sein du demi-bobinage. Ainsi, le couplage de chaque demi-bobinage au niveau du point de connexion de la phase est réduit, voire nul.

En considérant la phase A, dans un demi-bobinage, les bobines sont enroulées en sens inverse. Les bobines d'un demi-bobinage sont parcourues par un même courant. Ainsi, le flux de la bobine A1 compense celui de la bobine A1', et le flux de la bobine A2 compense celui de la bobine A2'. Le couplage magnétique de chaque demi-bobinage au niveau du point de connexion A0 est donc réduit, voire nul.

Le bobinage illustré permet d'obtenir un stator dont les phases sont magnétiquement indépendantes, ce qui permet d'obtenir une inductance mutuelle nulle entre les phases.

Ce bobinage nécessite de disposer d'un stator comportant deux fois plus de dents qu'un stator avec un bobinage classique mais le diamètre du stator reste conservé car chaque dent comporte deux fois moins de spires qu'un bobinage classique.

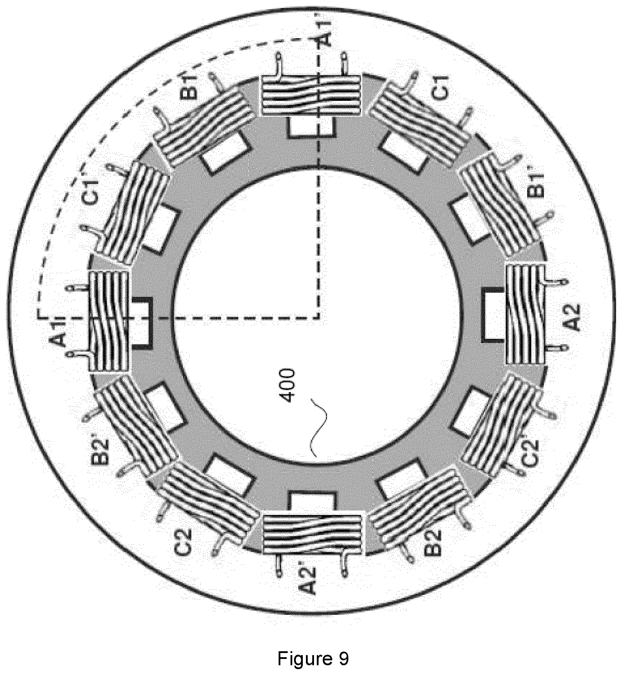

Un tel bobinage est représenté sur un stator 500 à deux paires de pôles dont chaque demi-bobinage est indépendant magnétiquement du second en référence à la figure 9.

L'invention a été principalement décrite pour un moteur triphasé ; toutefois, l'invention est également applicable par transposition à une machine électrique polyphasée.

L'invention a été principalement décrite avec un réseau électrique domestique de type triphasé ; toutefois, l'invention est également applicable par transposition à un réseau électrique monophasé.

L'invention a été principalement décrite pour une application dans un véhicule automobile électrique ; toutefois, l'invention pourra être utilisée dans d'autres domaines et notamment dans des dispositifs de génération d'énergie de type éolien ou hydraulique.

Les autres avantages de l'invention sont notamment les suivants :
- amélioration du filtrage des courants en mode charge ;
- amélioration du contrôle des composantes homopolaires en mode d'alimentation ;
- amélioration des tolérances du moteur en cas d'une panne d'une phase du moteur.

## Revendications

1. Moteur électrique (130) à courant alternatif d'un dispositif électrique combiné d'alimentation et de charge (100), ledit moteur électrique (130) étant formé par un stator (300, 400, 500) configuré pour être relié à un réseau électrique (200), ledit courant de charge dudit réseau (200) étant injecté via un point de connexion divisant chaque phase dudit stator configurée pour être reliée à une phase dudit réseau en deux demi-bobinages, chaque demi-bobinage d'une phase comportant une pluralité de bobines présentant une inductance de fuite,
**caractérisé en ce que** les bobines d'une phase sont réparties de part et d'autre du point de connexion de la phase de façon à réduire le couplage magnétique des demi-bobinages au niveau du point de connexion, de sorte qu'il réside une inductance apparente non nulle au dit point de connexion en mode charge dudit dispositif (100), ladite inductance apparente étant supérieure à ladite inductance de fuite desdites bobines.

2. Moteur électrique (130) à courant alternatif selon la revendication 1 **caractérisé en ce que** chaque demi-bobinage est formé par une pluralité n de bobines câblées en série.

3. Moteur électrique (130) à courant alternatif selon la revendication 1 **caractérisé en ce que** chaque demi-bobinage est formé par une pluralité n'/2 groupes de bobines câblées en série, chacun desdits groupes comportant une pluralité n de bobines câblées en parallèle.

4. Moteur électrique (130) à courant alternatif selon l'une des revendications 1 à 3 **caractérisé en ce que** chaque demi-bobinage comporte le même nombre de spires.

5. Moteur électrique (130) à courant alternatif selon l'une des revendications 1 à 4 **caractérisé en ce que** chacun des demi-bobinages d'une phase est diamétralement opposé sur ledit stator de façon à réduire le couplage magnétique entre deux demi-bobinages d'une phase.

6. Moteur électrique (130) à courant alternatif selon l'une des revendications 1 à 5 **caractérisé en ce que** ledit stator (400) comporte des entrefers, lesdits entrefers s'étendant radialement à travers le stator (400), permettant de réduire le couplage magnétique entre les deux demi-bobinages d'une phase.

7. Moteur électrique (130) à courant alternatif selon l'une des revendications 1 à 6 **caractérisé en ce que** ledit moteur comporte un rotor (600) comportant des ouvertures (610) disposées selon une direction radiale et/ou des entrefers, permettant d'augmenter la réluctance entre les deux demi-bobinages de chaque phase dudit stator.

8. Moteur électrique (130) à courant alternatif selon l'une des revendications 1 à 7 **caractérisé en ce que** chaque bobine est répartie sur plusieurs encoches, et **en ce que** deux bobines d'une phase appartenant à des demi-bobinages différents sont réparties sur des encoches situées respectivement de part et d'autre du point de connexion.

9. Moteur électrique (130) à courant alternatif selon l'une des revendications 1 à 8 **caractérisé en ce que** chaque demi-bobinage comprend au moins deux bobines enroulées en sens inverse l'une par rapport à l'autre de façon à réduire le couplage magnétique entre les deux demi-bobinages d'une phase.

10. Moteur électrique (130) à courant alternatif selon la revendication 9 caractérisé en ce chaque demi-bobinage comprend un nombre pair de bobines, chaque bobine ayant une bobine correspondante enroulée en sens inverse.

11. Dispositif électrique combiné d'alimentation et de charge (100) comportant :
- un moteur électrique (130) à courant alternatif selon l'une des revendications 1 à 10 relié à un réseau électrique (200) ;
- un onduleur (120) ;
- des moyens d'accumulation d'énergie électrique (110).

12. Dispositif électrique combiné d'alimentation et de charge (100) selon la revendication 11 **caractérisé en ce qu'**il comporte un convertisseur continu-continu (140).

## Patentansprüche

1. Wechselstrom-Elektromotor (130) einer kombinierten elektrischen Versorgungs- und Ladevorrichtung (100), wobei der Elektromotor (130) von einem Stator (300, 400, 500) gebildet ist, der konfiguriert ist, um mit einem Stromnetz (200) verbunden zu sein, wobei der Ladestrom des Netzes (200) über einen Anschlusspunkt eingespeist wird, der jede Phase des Stators teilt, die konfiguriert ist, um mit einer Phase des Netzes in zwei Halbwicklungen verbunden zu sein, wobei jede Halbwicklung einer Phase eine Vielzahl von Spulen aufweist, die eine Streuinduktivität aufweisen,
**dadurch gekennzeichnet, dass** die Spulen einer Phase beiderseits des Anschlusspunkts der Phase derart verteilt sind, dass die Magnetkopplung der Halbwicklungen im Bereich des Anschlusspunkts derart reduziert wird, dass eine Scheininduktivität von nicht Null am Anschlusspunkt im Lademodus der Vorrichtung (100) vorliegt, wobei die Scheininduktivität höher als die Streuinduktivität der Spulen ist.

2. Wechselstrom-Elektromotor (130) nach Anspruch 1, **dadurch gekennzeichnet, dass** jede Halbwicklung von einer Vielzahl n von in Reihe verkabelter Spulen gebildet ist.

3. Wechselstrom-Elektromotor (130) nach Anspruch 1, **dadurch gekennzeichnet, dass** jede Halbwicklung von einer Vielzahl n'/2 Gruppen von in Reihe verkabelter Spulen gebildet ist, wobei jede der Gruppen eine Vielzahl n von parallel verkabelten Spulen aufweist.

4. Wechselstrom-Elektromotor (130) nach einem der Ansprüche 1 bis 3, **dadurch gekennzeichnet, dass** jede Halbwicklung dieselbe Anzahl von Windungen aufweist.

5. Wechselstrom-Elektromotor (130) nach einem der Ansprüche 1 bis 4, **dadurch gekennzeichnet, dass** jede der Halbwicklungen einer Phase dem Stator derart diametral gegenüberliegt, dass die Magnetkopplung zwischen zwei Halbwicklungen einer Phase reduziert wird.

6. Wechselstrom-Elektromotor (130) nach einem der Ansprüche 1 bis 5, **dadurch gekennzeichnet, dass** der Stator (400) Spalte aufweist, wobei sich die Spalte radial durch den Stator (400) erstrecken, was erlaubt, die Magnetkopplung zwischen den zwei Halbwicklungen einer Phase zu reduzieren.

7. Wechselstrom-Elektromotor (130) nach einem der Ansprüche 1 bis 6, **dadurch gekennzeichnet, dass** der Motor einen Rotor (600) aufweist, der Öffnungen (610) aufweist, die gemäß einer radialen Richtung angeordnet sind, und/oder Spalte, die erlauben, die Reluktanz zwischen den zwei Halbwicklungen jeder Phase des Stators zu erhöhen.

8. Wechselstrom-Elektromotor (130) nach einem der Ansprüche 1 bis 7, **dadurch gekennzeichnet, dass** jede Spule über mehrere Schlitze verteilt ist, und dass zwei Spulen einer Phase, die zu unterschiedlichen Halbwicklungen gehören, über Schlitze verteilt sind, die sich jeweils beiderseits des Anschlusspunkts befinden.

9. Wechselstrom-Elektromotor (130) nach einem der Ansprüche 1 bis 8, **dadurch gekennzeichnet, dass** jede Halbwicklung mindestens zwei Spulen umfasst, die in zueinander umgekehrter Richtung derart gewickelt sind, dass die Magnetkopplung zwischen den zwei Halbwicklungen einer Phase reduziert wird.

10. Wechselstrom-Elektromotor (130) nach Anspruch 9, **dadurch gekennzeichnet, dass** jede Halbwicklung eine paarige Anzahl von Spulen umfasst, wobei jede Spule eine entsprechende Spule hat, die in umgekehrter Richtung gewickelt ist.

11. Kombinierte elektrische Versorgungs- und Ladevorrichtung (100), aufweisend:
- einen Wechselstrom-Elektromotor (130) nach einem der Ansprüche 1 bis 10, der mit einem Stromnetz (200) verbunden ist;
- einen Wechselrichter (120);
- Speichermittel elektrischer Energie (110).

12. Kombinierte elektrische Versorgungs- und Ladevorrichtung (100) nach Anspruch 11, **dadurch gekennzeichnet, dass** sie einen Gleichspannungswandler (140) aufweist.

## Claims

1. An alternating current electric motor (130) of a combined supply and charging electric device (100), said electric motor (130) being formed by a stator (300, 400, 500) configured to be connected to a power grid (200), said charging current of said grid (200) being injected via a connexion point dividing each phase of said stator configured to be connected to a phase of said grid into two half-windings, each half-winding of a phase including a plurality of coils having a leak inductance,
**characterised in that** the coils of a phase are distributed on either side of the connection point of the phase so as to reduce magnetic coupling of the half-windings at the connection point, such that a non-zero apparent inductance resides at said connection point in a charging mode of said device (100), said apparent inductance being higher than said leak inductance of said coils.

2. The alternating current electric motor (130) according to claim 1, **characterised in that** each half-winding is formed by a plurality n of series-wired coils.

3. The alternating current electric motor (130) according to claim 1, **characterised in that** each half-winding is formed by a plurality n'/2 of groups of series-wired coils, each of said groups including a plurality n of parallel-wired coils.

4. The alternating current electric motor (130) according to one of claims 1 to 3, **characterised in that** each half-winding includes the same number of turns.

5. The alternating current electric motor (130) according to one of claims 1 to 4, **characterised in that** each of the half-windings of a phase is diametrically opposite on said stator so as to reduce magnetic coupling between two half-windings of a phase.

6. The alternating current electric motor (130) according to one of claims 1 to 5, **characterised in that** said stator (400) includes air gaps, said air gaps extending radially through the stator (400), for reducing magnetic coupling between both half-windings of a phase.

7. The alternating current electric motor (130) according to one of claims 1 to 6, **characterised in that** said motor includes a rotor (600) including openings (610) disposed along a radial direction and/or air gaps, for increasing reluctance between both half-windings of each phase of said stator.

8. The alternating current electric motor (130) according to one of claims 1 to 7, **characterised in that** each coil is distributed on several notches, and **in that** two coils of a phase belonging to different half-windings are distributed on notches respectively located on either side of the connection point.

9. The alternating current electric motor (130) according to one of claims 1 to 8, **characterised in that** each half-winding comprises at least two coils wound in a reverse direction to each other so as to reduce magnetic coupling between both half-windings of a phase.

10. The alternating current electric motor (130) according to claim 9, **characterised in that** each half-winding comprises an even number of coils, each coil having a corresponding coil wound in the reverse direction.

11. A combined supply and charging electric device (100) including:
- an alternating current electric motor (130) according to one of claims 1 to 10 connected to a power grid (200);
- a power inverter (120);
- electric energy storage means (110).

12. The combined supply and charging electric device (100) according to claim 11, **characterised in that** it includes a DC-DC converter (140).
